# EUROPEAN PATENT SPECIFICATION

(11) **EP 2 825 440 B1**
(45) Date of publication and mention of the grant of the patent: **04.05.2016**
(21) Application number: 13720068.9
(22) Date of filing: 13.03.2013
(51) Int. Cl.: B62D 21/10, B62D 31/00, B62D 63/02, B60G 11/00, B60J 5/00

(54) **BEARING PLATFORM FOR A MOTOR VEHICLE AND STRUCTURE COMPRISING SAID PLATFORM**
LAGERPLATTFORM FÜR EIN KRAFTFAHRZEUG SOWIE STRUKTUR MIT DIESER PLATTFORM
PLATE-FORME D'APPUI POUR UN VÉHICULE À MOTEUR ET STRUCTURE COMPRENANT LADITE PLATE-FORME

(30) Priority: 14.03.2012 IT TO20120220
(43) Date of publication of application: 21.01.2015
(73) Proprietor: Fioravanti S.r.l., 10121 Torino (IT)
(72) Inventor: FIORAVANTI, Leonardo, I-10024 Moncalieri (Torino) (IT)
(74) Representative: Quinterno, Giuseppe
(86) International application number: PCT/IB2013/051972
(87) International publication number: WO 2013/136271

(56) References cited:
- EP-A2- 1 375 310
- GB-A- 2 479 978
- JP-A- 9 226 632

## Description

The present invention relates primarily to a bearing platform for a motor vehicle.

Document JP 9 226 632 discloses the preamble of claim 1.

One object of the present invention is to provide a bearing platform which has a greatly simplified design and can be produced in a simple and low-cost manner and which is characterized by extremely versatile use.

This object, together with other objects, is achieved according to the invention by means of a bearing platform for a motor vehicle including a pair of essentially planar end structures which protrudingly extend, longitudinally on opposite sides, from an intermediate structure portion which comprises:
a longitudinal inverted-channel formation which extends between transversely intermediate portions of said end structures, and
a pair of transverse inverted-channel formations which extend on opposite sides from an intermediate portion of the longitudinal formation;
each transverse formation being connected to said end structures and to the longitudinal formation by means of a platform portion, which joins at the bottom the transverse formation to the longitudinal formation, and an inclined plate portion, which joins the platform portion to the adjacent end structure.

Conveniently, the aforementioned end structures, the longitudinal formation and the transverse formations, as well as the platform portions and the inclined plate portions, may be made from a single sheet or slab of composite material, for example carbon-based material or metallic material, which is plastically shaped.

Alternatively, the platform may be assembled by joining together a plurality of partial modules.

Advantageously, the bearing platform may be provided with a shape which is symmetrical with respect to a longitudinal vertical mid-plane and optionally also with respect to a transverse vertical mid-plane.

By using symmetrical shapes it is possible where necessary to reduce the number of types of partial modules which are intended to be joined together in order to form the platform.

The present invention also relates to a structure of a motor vehicle comprising a bearing platform of the type defined above, as well as a motor vehicle including such a bearing platform or structure.

Further characteristic features and advantages of the invention will become clear from the following detailed description provided purely by way of a non-limiting example, with reference to the accompanying drawings in which:
Figure 1 is a perspective view of a bearing platform for a motor vehicle according to the present invention;

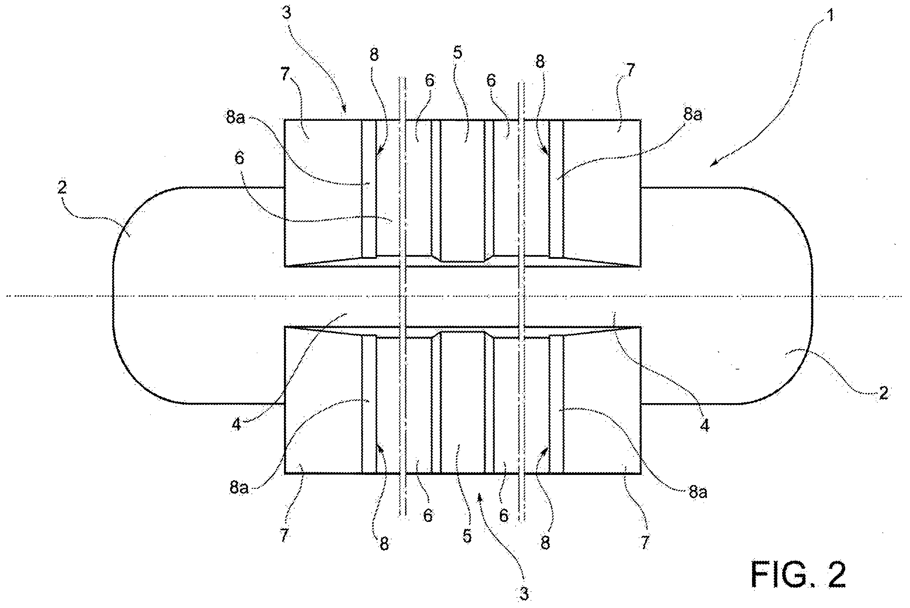

Figure 2 is a top plan view in the direction of the arrow II of Figure 1;
Figure 3 is a bottom plan view in the direction of the arrow III of Figure 1;
Figure 4 is a perspective view which shows a structure for a motor vehicle comprising a bearing platform according to the preceding figures;
Figure 5 is a side view of another structure including a bearing platform according to the present invention;
Figure 6 is a side elevation view of a motor vehicle comprising a bearing platform and a structure according to Figure 5;
Figure 7 is a side view of part of an electrically powered motor vehicle comprising a bearing platform according to the invention; and
Figure 8 is a partial plan view which shows an embodiment of the suspension systems of the motor vehicle according to Figure 7.

In the drawings a bearing platform for a motor vehicle according to the present invention is denoted overall by 1.

In the example of embodiment shown, the bearing platform 1 comprises two essentially planar end structures 2 which are at least approximately horizontal and which protrudingly extend, longitudinally on opposite sides, from an intermediate structure portion denoted overall by 3.

The intermediate structure 3 comprises in turn a longitudinal inverted-channel formation 4 which extends between transversely intermediate portions of the end structures 2.

The intermediate structure 3 also comprises a pair of transverse formations 5, also in the form of an inverted channel, which extend on opposites sides from an intermediate portion of the longitudinal formation 4.

Each transverse formation 5 is connected to the end structures 2 and to the longitudinal formation 4 by means of a platform portion 6 which is at least approximately horizontal and an inclined plate portion 7.

Each platform portion 6 joins a bottom end portion of a transverse formation 5 to a bottom portion of the longitudinal formation 4.

Each inclined plate portion 7 joins a corresponding platform portion 6 to part of the adjacent end structure 2.

Although in the drawings accompanying the present description the longitudinal formation 4 and transverse formations 5 have walls which are connected at an angle, and the connections between the formations 4, 5, the platform portions 6, the inclined walls 7 and the end structures 2 are also angled, in general these connections may have a curvilinear progression.

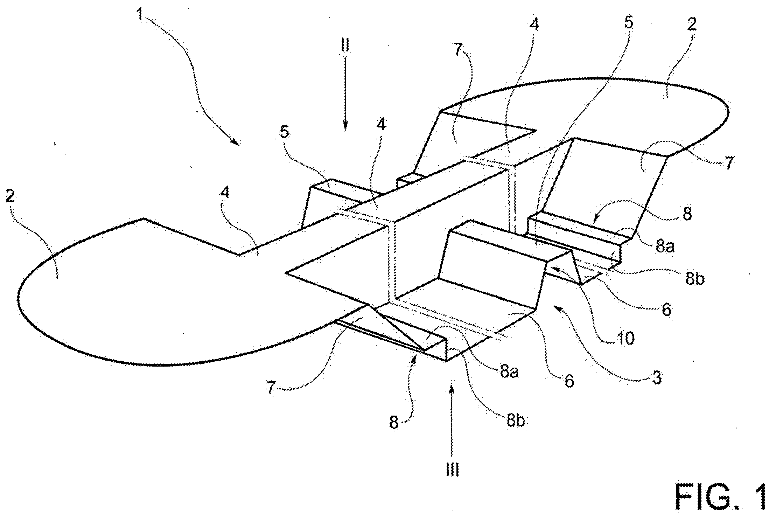

As can be seen for example in Figure 1, the longitudinal formation 4 has a top surface which is preferably coplanar with the end structures 2.

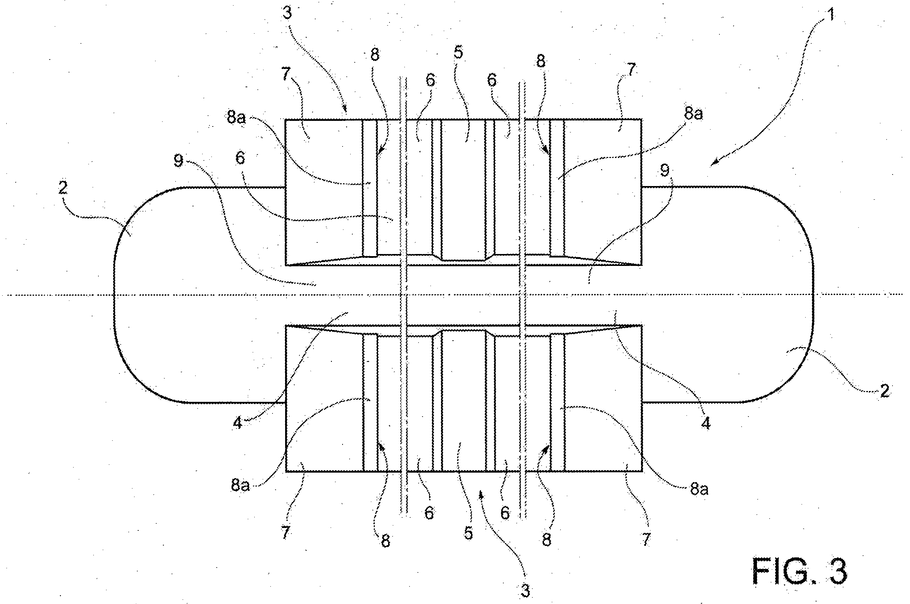

With reference to Figures 1 and 3, in one embodiment, a plurality of transverse box-like reinforcing and stiffening formations 8 are provided in the platform elements or portions 6.

In the embodiment shown by way of example, each formation 8 has an essentially horizontal wall 8a, which is raised with respect to the corresponding platform element 6, and an essentially vertical or slanting connecting wall 8b.

The longitudinal formation 4 has, formed therein, a compartment or receptacle - denoted by 9 in Figure 3 - which is suitable for receiving devices of various kinds, such as electric battery sets.

Similarly, corresponding compartments or receptacles 10 are defined inside the transverse formations 5 (Figure 1).

The formations 4 and 5 may be open at the bottom and/or also only partially closed.

Conveniently, although not necessarily, the overall shape of the bearing platform 1 may be symmetrical with respect to a longitudinal vertical mid-plane and therefore a vertical plane passing through the middle of the longitudinal formation 4.

Moreover, the shape of the bearing platform 1 overall may be optionally also symmetrical with respect to a transverse vertical mid-plane and therefore a vertical plane passing through the middle of the transverse formations 5.

Advantageously, owing to the symmetry or symmetries of the platform, the latter may be formed by joining together a plurality of partial modules which may consist of at least two types or shapes corresponding to two mirror-image "quarters" of said shape.

The symmetry or symmetries may concern the shape of the intermediate portion or structure 3 alone. In this case, if the longitudinal formation 4 is made with the same height as the transverse formations 5, with their tops coplanar, this intermediate portion or structure 3 may, if necessary, be formed by joining together four partial modules which are identical to each other.

When performing the joining operations it is possible to ensure that the transverse width of the longitudinal formation 4 has a desired value, depending on the "wheel track" envisaged for the vehicle for which the platform is intended.

Similarly, it is possible to ensure that the width of the transverse formations 5 has a value corresponding to the length or wheelbase required for the vehicle.

Preferably, but not necessarily, the transverse formations 5 have a height smaller than that of the longitudinal formation 4, their top surfaces extending at a level lower than that of the top surface of the longitudinal formation 4.

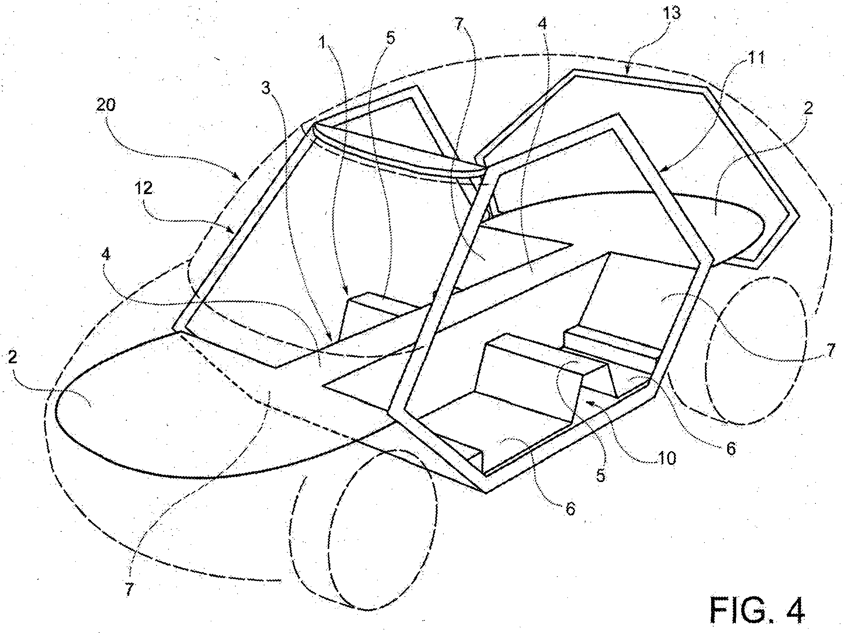

Figure 4 also illustrates qualitatively a structure for a motor vehicle including a bearing platform 1 of the type described above.

In this example of embodiment, the structure 20 also comprises a pair of respectively right-hand and left-hand side structures 11 and 12 fastened in a known manner to the longitudinal sides of the bearing platform 1. In the example of embodiment shown the side structures comprise simple frames 11, 12 with an essentially hexagonal shape defining lateral openings or passages for accessing the passenger compartment of the motor vehicle.

The structure 20 shown in Figure 4 also comprises a rear side structure 13 which is fixed to an end structure 2 of the bearing platform 1 and defines a rear access opening or passage.

This rear structure 13 may also consist of a simple frame, for example with an approximately hexagonal shape.

The side frames 11, 12 and the rear frame 13 may conveniently have the same form, and in particular the same symmetrical form with respect to a vertical mid-plane, so as to provide a three-door vehicle in accordance with European patent EP 0,836,558 B1 in the name of the same Applicant. In this case respective closing doors which are identical to each other may be associated with the frames 11, 13, with obvious advantages from a constructional point of view.

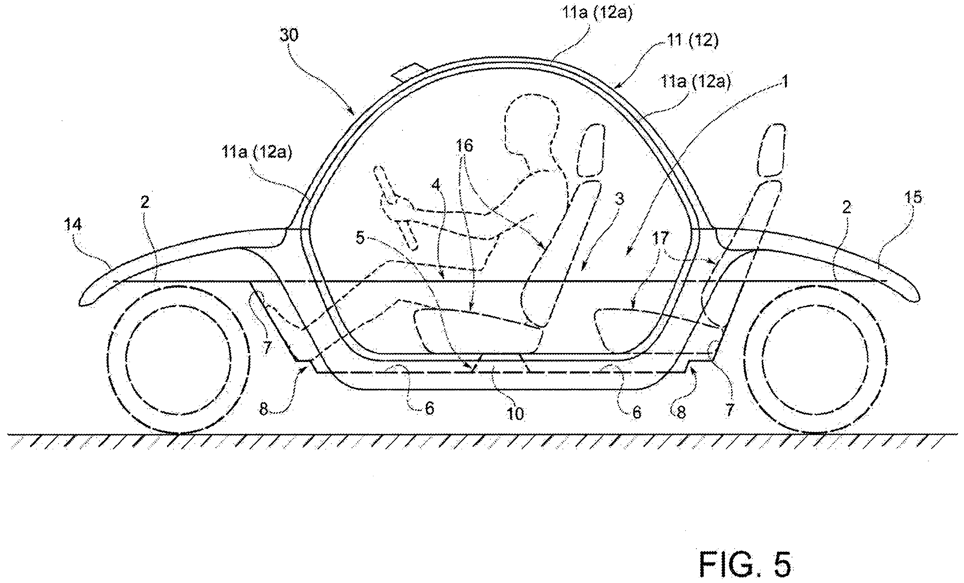

Figure 5 also illustrates qualitatively another structure 30 for a motor vehicle including a bearing platform 1 of the type described above. This structure also comprises a pair of side structures 11, 12 which are conveniently, but not necessarily, identical to each other and each define at least one opening or passage for laterally accessing the passenger compartment of the motor vehicle.

In the embodiment according to Figure 5 the side structures are interconnected by two curved end members 14, 15 which extend around the end structures 2 of the bearing platform 1 on opposite sides of the intermediate frame. The curved members 14, 15 are designed to act as supports for fixing the bodywork panels and/or other devices.

Conveniently the curved appendages 14, 15 may be formed so as to be identical to the top arched portion 11a, 12a of the side structures 11, 12.

Figure 5 shows in schematic form an embodiment in which the passenger compartment of the motor vehicle has 2+2 seats or "places" for a corresponding number of passengers. The front seats 16 are conveniently fixed onto the transverse formations 5, while the rear seats 17 are fixed to the platform portions 6 and to the rear inclined walls 7.

Advantageously, although not necessarily, the backrests of these seats 16, 17 are reclinable and, in the reclined condition (shown in broken lines only for the rear seats in Figure 5), they are preferably coplanar with the top surface of the longitudinal formation 4 of the bearing platform 1.

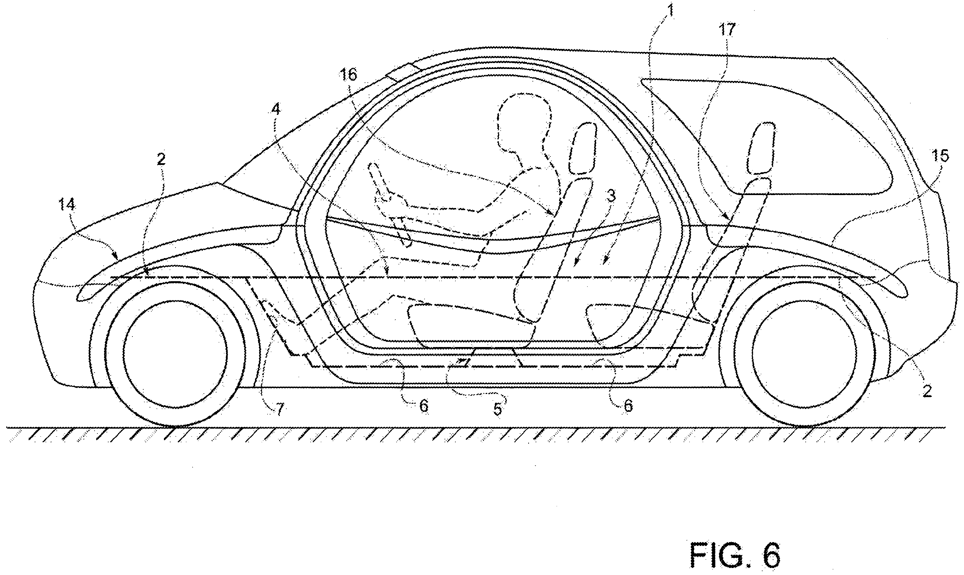

Figure 6 shows a motor vehicle comprising the structure according to Figure 5 and provided with two side doors and a rear door which have a symmetrical form with respect to a vertical mid-plane and are identical to each other, in accordance with the European patent mentioned further above.

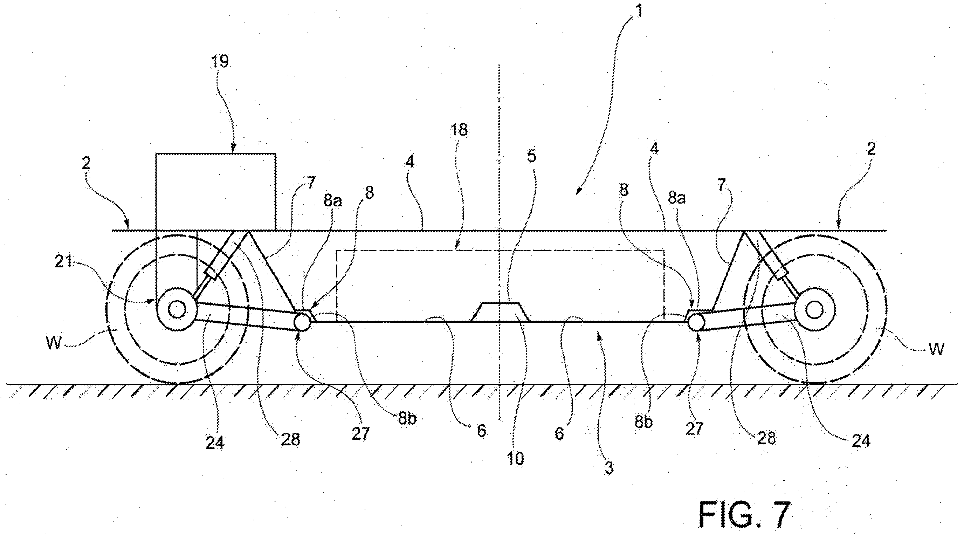

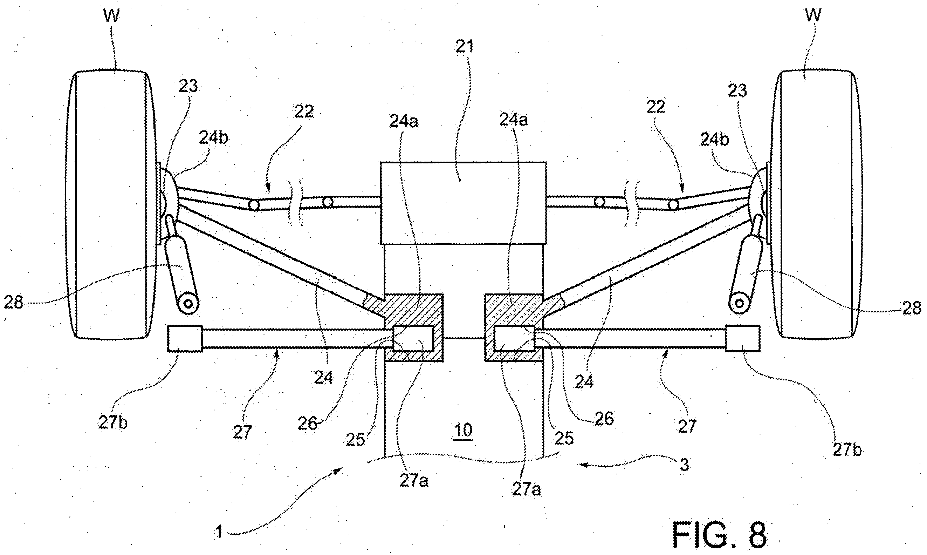

Figures 7 and 8 show part of an electrically powered motor vehicle including a bearing platform 1 according to the present invention.

A container 19 containing electronic control and power circuits, in particular inverters, etc., is housed on an end structure 2 which may be the front structure or the rear structure.

The same end structure 2 may have, suspended underneath, an electric drive motor 21 which, via articulated drive shafts, denoted by 22 in Figure 8, is coupled to the wheel support hubs 23 of a same axle.

The wheels W of the vehicle shown in Figures 7 and 8 are suspended from the bearing structure 1 by means of a pair of slanting pivoting arms 24, each of which has an end 24a mounted rotatably about an essentially horizontal transverse axis in a corresponding seat 25 provided in the bottom of the bearing platform 1.

The other ends 24b of the arms 24 are coupled to the wheel support hubs 23 associated with the wheels W.

The end 24a of each suspension arm 24 is provided with a respective coaxial seat 26 inside which an end 27a of a torsion bar 27 is fixed, for example by means of a prismatic or splined coupling, the other end 27b thereof being fixed to the bearing platform 1.

A respective shock-absorbing device 28 may be arranged between each wheel support hub 23 and the bearing structure 1 (Figure 8).

The manner in which the wheels W are suspended from the bearing platform 1 described above with reference to Figures 7 and 8 is merely exemplary, this bearing platform being suitable also for implementing other designs of suspensions known per se.

In the case of a low-cost vehicle, the suspensions for all four wheels may be designed identical to each other.

In any case the suspension system illustrated above with reference to Figures 7 and 8 may also be conveniently applied to a motor vehicle which is not electrically powered and equipped with a conventional internal-combustion engine or other hybrid propulsion system.

The bearing platform according to the invention is suitable for use in the production of front drive, rear drive or four-wheel drive motor vehicles.

Obviously, without affecting the principle of the invention, the embodiments and the constructional details may be significantly modified with respect to that described and illustrated purely by way of a non-limiting example, without thereby departing from the scope of the invention as defined in the accompanying claims.

## Claims

1. Bearing platform (1) for a motor vehicle, including a pair of end structures (2) which protrudingly extend, on longitudinally opposite sides, from an intermediate portion or structure (3) which comprises
a longitudinal inverted-channel formation (4) which extends between transversely intermediate portions of said end structures (2), and
a pair of transverse inverted-channel formations (5) which extend on opposite sides from an intermediate portion of the longitudinal formation (4);
**characterized in that**
each transverse formation (5) is connected to said end structures (2) and the longitudinal formation (4) by means of a platform portion (6), which joins at the bottom the transverse formation (5) to the longitudinal formation (4), and an inclined plate portion (7), which joins the platform portion (6) to the adjacent end structure (2).

2. Bearing platform according to claim 1, wherein the longitudinal formation (4) has a top surface which is substantially coplanar with the end structures (2).

3. Bearing platform according to any one of the preceding claims, wherein the longitudinal formation (4) and/or at least one transverse formation (5) is at least partially closed at the bottom.

4. Bearing platform according to any one of the preceding claims, wherein a plurality of preferably transverse stiffening formations (8) are connected at the bottom to the intermediate structure (3).

5. Bearing platform according to any one of the preceding claims, having a shape which is symmetrical with respect to a longitudinal vertical mid-plane.

6. Bearing platform according to any one of the preceding claims, having a shape which is symmetrical with respect to a transverse vertical mid-plane.

7. Bearing platform according to one of the preceding claims, wherein said end structures (2), the longitudinal formation (4) and the transverse formations (5), as well as the platform portions (6) and the inclined plate portions (7), are made from a single sheet or slab of composite material, in particular carbon-based material or metallic material, which is plastically shaped.

8. Platform according to any one of claims 1 to 6, obtained by joining together a plurality of partial modules, in particular of at least two different types.

9. Platform according to one of the preceding claims, wherein the intermediate portion or structure (3) is made by joining together a plurality of partial modules of a same type or shape or of several different types or shapes.

10. Platform according to claim 8 or 9, wherein the transverse width of the longitudinal formation (4) is determined depending on the wheel track of the vehicle for which the platform (1) is intended.

11. Platform according to one of claims 8 to 10, wherein the width of the transverse formations (5) is determined depending on the length or the wheel base of the vehicle for which the platform (1) is intended.

12. Motor-vehicle structure (20; 30) comprising a bearing platform (1) according to one or more of the preceding claims.

13. Structure according to claim 12, comprising further a pair of respectively right-hand and left-hand side structures (11, 12) fastened to the longitudinal sides of said bearing platform (1), each side structure (11, 12) defining at least one lateral opening or passage for accessing the passenger compartment of the motor vehicle.

14. Structure according to claim 12, wherein the lateral access opening or passage of each side structure (11, 12) has a shape which is essentially symmetrical with respect to a vertical mid-plane.

15. Structure according to claim 12, comprising further a rear side structure (13) fastened to an end structure (2) of said bearing platform (1) and defining a rear access opening or passage.

16. Structure according to claims 13 and 14, wherein the rear opening or passage has the same shape as the side access openings or passages.

17. Structure according to one of claims 13 to 16, wherein the side structures (11, 12) are interconnected by curved end members (14, 15) which extend around the end structures (2) of the bearing platform.

18. Structure according to claim 17, wherein said curved end members (14, 15) are identical to a top arched portion (11a, 12a) of the side structures.

19. Motor vehicle, comprising a bearing platform according to one of claims 1 to 11 or a structure according to one of claims 12 to 18.

20. Motor vehicle according to claim 19, comprising at least one axle with wheels (W) which are suspended from the bearing platform (1) by means of a pair of inclined pivoting arms (24) having one end connected to said bearing platform (1) rotatably about an essentially horizontal axis, as well as an associated torsion bar (27) arranged between said ends of the suspension arm (24) and said bearing platform (1), and a shock absorber (28) arranged between the wheel (W) and said bearing platform (1).

## Patentansprüche

1. Lagerplattform (1) für ein Kraftfahrzeug, aufweisend ein Paar Endstrukturen (2), die sich an in Längsrichtung gegenüberliegenden Seiten von einem Zwischenbereich oder einer Zwischenstruktur (3) vorstehend erstrecken, der bzw. die aufweist:
ein als umgekehrter Kanal vorgesehener Längsaufbau (4), der sich zwischen Querzwischenbereichen der Endstrukturen (2) erstreckt, und
ein Paar als umgekehrter Kanal vorgesehene Queraufbauten (5), die sich auf gegenüberliegenden Seiten von einem Zwischenbereich des Längsaufbaus (4) erstrecken,
**dadurch gekennzeichnet, dass** jeder Queraufbau (5) mit den Endstrukturen (2) und dem Längsaufbau (4) mittels eines Plattformbereichs (6), der den Queraufbau (5) mit dem Längsaufbau (4) an dem Boden verbindet, und eines geneigten Plattenbereichs (7), der den Plattformbereich (6) mit der benachbarten Endstruktur (2) verbindet, verbunden ist.

2. Lagerplattform nach Anspruch 1, wobei der Längsaufbau (4) eine obere Fläche aufweist, die im Wesentlichen koplanar mit den Endstrukturen (2) ist.

3. Lagerplattform nach einem der vorherigen Ansprüche, wobei der Längsaufbau (4) und/oder zumindest ein Queraufbau (5) zumindest teilweise an dem Boden geschlossen ist.

4. Lagerplattform nach einem der vorherigen Ansprüche, wobei eine Mehrzahl von vorzugsweise querverlaufenden Versteifungsaufbauten (8) an dem Boden mit der Zwischenstruktur (3) verbunden ist.

5. Lagerplattform nach einem der vorherigen Ansprüche, die eine Form aufweist, die symmetrisch bezüglich einer längsverlaufenden vertikalen Mittelebene ist.

6. Lagerplattform nach einem der vorherigen Ansprüche, die eine Form aufweist, die symmetrisch bezüglich einer querverlaufenden vertikalen Mittelebene ist.

7. Lagerplattform nach einem der vorherigen Ansprüche, wobei die Endstrukturen (2), der Längsaufbau (4) und die Queraufbauten (5) sowie die Plattformbereiche (6) und die geneigten Plattenbereiche (7) aus einer einzelnen Lage oder Platte eines Verbundmaterials, insbesondere eines kohlenstoffbasierten Materials oder metallischen Materials, hergestellt ist, das plastisch verformt ist.

8. Plattform nach einem der Ansprüche 1 bis 6, erhalten durch Miteinanderverbinden einer Mehrzahl von Teilmodulen, insbesondere von zumindest zwei unterschiedlichen Typen.

9. Plattform nach einem der vorherigen Ansprüche, wobei der Zwischenbereich oder die Zwischenstruktur (3) durch Miteinanderverbinden einer Mehrzahl von Teilmodulen eines selben Typs oder einer selben Form oder mehrerer unterschiedlicher Typen oder Formen hergestellt ist.

10. Plattform nach Anspruch 8 oder 9, wobei die Querbreite des Längsaufbaus (4) basierend auf der Spurweite des Fahrzeugs, für das die Plattform (1) gedacht ist, bestimmt ist.

11. Plattform nach einem der Ansprüche 8 bis 10, wobei die Breite der Queraufbauten (5) basierend auf der Länge oder dem Achsstand des Fahrzeugs, für das die Plattform (1) gedacht ist, bestimmt ist.

12. Kraftfahrzeugstruktur (20; 30) aufweisend eine Lagerplattform (1) gemäß einem oder mehreren der vorherigen Ansprüche.

13. Struktur nach Anspruch 12, ferner aufweisend ein Paar von jeweils rechten und linken Seitenstrukturen (11, 12), die an den Längsseiten der Lagerplattform (1) angebracht sind, wobei jede Seitenstruktur (11, 12) zumindest eine seitliche Öffnung oder einen seitlichen Durchgang für den Zugang zu dem Passagierabteil des Kraftfahrzeugs definiert.

14. Struktur nach Anspruch 12, wobei die seitliche Zugangsöffnung oder der seitliche Zugangsdurchgang jeder Seitenstruktur (11, 12) eine Form aufweist, die im Wesentlichen symmetrisch bezüglich einer vertikalen Mittelebene ist.

15. Struktur nach Anspruch 12, ferner aufweisend eine Rückseitenstruktur (13), die an einer Endstruktur (2) der Lagerplattform (1) angebracht ist und eine hintere Zugangsöffnung oder einen hinteren Zugangsdurchgang definiert.

16. Struktur nach Anspruch 13 und 14, wobei die hintere Öffnung oder der hintere Durchgang dieselbe Form wie die Seitenzugangsöffnungen oder die Seitenzugangsdurchgänge aufweist.

17. Struktur nach einem der Ansprüche 13 bis 16, wobei die Seitenstrukturen (11, 12) durch gekrümmte Endbauteile (14, 15), die sich um die Endstrukturen (2) der Lagerplattform erstrecken, miteinander verbunden sind

18. Struktur nach Anspruch 17, wobei die gekrümmten Endbauteile (14, 15) identisch mit einem oberen gewölbten Bereich (11a, 12a) der Seitenstrukturen sind.

19. Kraftfahrzeug, aufweisend eine Lagerplattform nach einem der Ansprüche 1 bis 11 oder eine Struktur nach einem der Ansprüche 12 bis 18.

20. Kraftfahrzeug nach Anspruch 19, aufweisend zumindest eine Achse mit Rädern (W), die an der Lagerplattform (1) mittels eines Paares geneigter Schwenkarme (24), die ein Ende, das mit der Lagerplattform (1) drehbar um eine im Wesentlichen horizontale Achse verbunden ist, aufweisen, sowie einer zugeordneten Torsionsstange (27), die zwischen den Enden der Aufhängungsarme (24) und der Lagerplattform (1) angeordnet ist, und eines Stoßdämpfers (28), der zwischen den Rädern (W) und der Lagerplattform (1) angeordnet ist, aufgehängt ist.

## Revendications

1. Plate-forme d'appui (1) pour un véhicule à moteur, incluant une paire de structures d'extrémité (2) qui s'étendent en faisant saillie, sur des côtés longitudinalement opposés, depuis une partie ou structure intermédiaire (3) qui comprend
une formation en canal inversé longitudinale (4) qui s'étend entre les parties transversalement intermédiaires desdites structures d'extrémité (2), et
une paire de formations en canal inversé transversales (5) qui s'étendent sur des côtés opposés depuis une partie intermédiaire de la formation longitudinale (4) ; **caractérisé en ce que** chaque formation transversale (5) est connectée auxdites structures d'extrémité (2) et à la formation longitudinale (4) au moyen d'une partie de plate-forme (6), qui relie le fond de la formation transversale (5) à la formation longitudinale (4), et une partie de plaque inclinée (7), qui relie la partie de plate-forme (6) à la structure d'extrémité adjacente (2).

2. Plate-forme d'appui selon la revendication 1, dans laquelle la formation longitudinale (4) a une surface supérieure qui est sensiblement coplanaire avec les structures d'extrémité (2).

3. Plate-forme d'appui selon l'une quelconque des revendications précédentes, dans laquelle la formation longitudinale (4) et/ou au moins une formation transversale (5) est/sont au moins partiellement fermée(s) au fond.

4. Plate-forme d'appui selon l'une quelconque des revendications précédentes, dans laquelle une pluralité de formations de raidissement de préférence transversales (8) sont reliées au fond à la structure intermédiaire (3).

5. Plate-forme d'appui selon l'une quelconque des revendications précédentes, ayant une forme qui est symétrique par rapport à un plan intermédiaire vertical longitudinal.

6. Plate-forme d'appui selon l'une quelconque des revendications précédentes, ayant une forme qui est symétrique par rapport à un plan intermédiaire vertical transversal.

7. Plate-forme d'appui selon l'une des revendications précédentes, dans laquelle lesdites structures d'extrémité (2), la formation longitudinale (4) et les formations transversales (5), ainsi que les parties de plate-forme (6) et les parties de plaque inclinées (7), sont réalisées à partir d'une seule feuille ou plaque de matériau composite, en particulier de matériau à base de carbone ou de matériau métallique, qui est façonné plastiquement.

8. Plate-forme selon l'une quelconque des revendications 1 à 6, obtenue en joignant une pluralité de modules partiels, en particulier d'au moins deux types différents.

9. Plate-forme selon l'une des revendications précédentes, dans laquelle la partie ou structure intermédiaire (3) est réalisée en assemblant une pluralité de modules partiels d'un même type ou d'une même forme ou de plusieurs types ou formes différent(e)s.

10. Plate-forme selon la revendication 8 ou 9, dans laquelle la largeur transversale de la formation longitudinale (4) est déterminée en fonction de l'écartement de roues du véhicule pour lequel la plate-forme (1) est prévue.

11. Plate-forme selon l'une des revendications 8 à 10, dans laquelle la largeur des formations transversales (5) est déterminée en fonction de la longueur de la base de roue du véhicule pour lequel la plate-forme (1) est prévue.

12. Structure de véhicule à moteur (20 ; 30) comprenant une plate-forme d'appui (1) selon une ou plusieurs des revendications précédentes.

13. Structure selon la revendication 12, comprenant en outre une paire de structures latérales respectivement droite et gauche (11, 12) fixées aux côtés longitudinaux de ladite plate-forme d'appui (1), chaque structure latérale (11, 12) définissant au moins une ouverture ou un passage latéral(e) pour accéder à l'habitacle du véhicule à moteur.

14. Structure selon la revendication 12, dans laquelle l'ouverture ou le passage d'accès latéral(e) de chaque structure latérale (11, 12) a une forme qui est essentiellement symétrique par rapport à un plan intermédiaire vertical.

15. Structure selon la revendication 12, comprenant en outre une structure latérale arrière (13) fixée à une structure d'extrémité (2) de ladite plate-forme d'appui (1) et définissant une ouverture ou un passage d'accès arrière.

16. Structure selon les revendications 13 et 14, dans laquelle l'ouverture ou le passage arrière a la même forme que les ouvertures ou passages d'accès latéraux.

17. Structure selon l'une des revendications 13 à 16, dans laquelle les structures latérales (11, 12) sont interconnectées par des éléments d'extrémité incurvés (14, 15) qui s'étendent autour des structures d'extrémité (2) de la plate-forme d'appui.

18. Structure selon la revendication 17, dans laquelle lesdits éléments d'extrémité incurvés (14, 15) sont identiques à une partie arquée supérieure (11a, 12a) des structures latérales.

19. Véhicule à moteur, comprenant une plate-forme d'appui selon l'une des revendications 1 à 11 ou une structure selon l'une des revendications 12 à 18.

20. Véhicule à moteur selon la revendication 19, comprenant au moins un essieu avec des roues (W) qui sont suspendues à partir de la plate-forme d'appui (1) au moyen d'une paire de bras pivotants inclinés (24) ayant une extrémité reliée à ladite plate-forme d'appui (1) de manière rotative autour d'un axe essentiellement horizontal, ainsi qu'une barre de torsion associée (27) agencée entre lesdites extrémités du bras de suspension (24) et ladite plate-forme d'appui (1), et un amortisseur (28) agencé entre la roue (W) et ladite plate-forme d'appui (1).
